# EUROPEAN PATENT APPLICATION

(11) **EP 4 322 548 A1**
(43) Date of publication of application: **14.02.2024**
(21) Application number: 22215945.1
(22) Date of filing: 22.12.2022
(51) Int. Cl.: H04R 1/10, G10K 11/178

(54) **EARPHONE CONTROLLING METHOD AND APPARATUS, AND STORAGE MEDIUM**

(30) Priority: 09.08.2022 CN 202210951446
(71) Applicant: Beijing Xiaomi Mobile Software Co., Ltd., Beijing 100085 (CN)
(72) Inventor: LIU, Chen, Beijing, 100085 (CN); BIAN, Pengzhao, Beijing, 100085 (CN)
(74) Representative: dompatent von Kreisler Selting Werner - Partnerschaft von Patent- und Rechtsanwälten mbB

(57) **Abstract**

An earphone controlling method includes: acquiring a first sound signal through a bone conduction element of the earphone; determining whether the first sound signal includes a voice signal sent by a wearer of the earphone according to the first sound signal; and controlling the earphone to operate in a transparent transmission mode when the first sound signal includes the voice signal.

## Description

### TECHNICAL FIELD

The present disclosure relates to the technical field of electronic devices, and more specifically, to an earphone controlling method and apparatus, an electronic device, a storage medium.

### BACKGROUND

Active noise reduction has now become the standard for mid-to-high-end earphones. At present, active noise reduction earphones have two modes: the noise reduction mode and the transparent transmission mode. The noise reduction mode can effectively shield external noise, while the transparent transmission mode can restore the external sound to the ears as much as possible and therefore reduce the impact of passive sound insulation on earphones.

### SUMMARY

The present disclosure provides an earphone controlling method and apparatus, a storage medium.

According to a first aspect of the present disclosure, there is provided an earphone controlling method, comprising:
acquiring a first sound signal through a bone conduction element of an earphone;
determining whether the first sound signal includes a voice signal sent by a wearer of the earphone according to the first sound signal; andg15
controlling the earphone to operate in a transparent transmission mode when the first sound signal includes the voice signal.

According to a second aspect of the present disclosure, there is provided an earphone controlling apparatus, the apparatus includes:
a first acquisition module configured to acquire a first sound signal through a bone conduction element of an earphone;
a first determination module configured to determine whether the first sound signal includes a voice signal sent by a wearer of the earphone according to the first sound signal; and
a first control module configured to control the earphone to operate in a transparent mode in the case the first sound signal includes the voice signal.

According to a third aspect of the present disclosure, there is provided an electronic device, comprising:
a processor;
a memory for storing processor-executable instructions;
wherein the processor is configured to execute the earphone controlling method according to the first aspect of the present disclosure.

According to a fourth aspect of the present disclosure, there is provided a non-transitory computer-readable storage medium, wherein an electronic device is enabled to execute the earphone controlling method according to the first aspect of the present disclosure when instructions in the storage medium are executed by a processor in the electronic device.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of the present disclosure, illustrate examples consistent with the present disclosure and, together with the description, serve to explain the principles of the present disclosure.
FIG. 1 is a flowchart of earphone controlling method illustrated according to one or more examples of the present disclosure.
FIG. 2 is an exemplary diagram of an earphone controlling method in one or more examples of the present disclosure.
FIG. 3 is a diagram of an earphone controlling apparatus illustrated according to one or more examples.
FIG. 4 is a block diagram of an electronic device illustrated according to one or more examples.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise indicated. The implementations in the following description of exemplary embodiments do not represent all implementations consistent with the present disclosure. Instead, they are merely examples of apparatuses and methods consistent with some aspects of the disclosure as detailed in the appended claims.

Terms used in the present disclosure are merely for describing specific examples and are not intended to limit the present disclosure. The singular forms "one", "the", and "this" used in the present disclosure and the appended claims are also intended to include a multiple form, unless other meanings are clearly represented in the context. It should also be understood that the term "and/or" used in the present disclosure refers to any or all of possible combinations including one or more associated listed items.

Reference throughout this specification to "one embodiment," "an embodiment," "an example," "some embodiments," "some examples," or similar language means that a particular feature, structure, or characteristic described is included in at least one embodiment or example. Features, structures, elements, or characteristics described in connection with one or some embodiments are also applicable to other embodiments, unless expressly specified otherwise.

It should be understood that although terms "first", "second", "third", and the like are used in the present disclosure to describe various information, the information is not limited to the terms. These terms are merely used to differentiate information of a same type. For example, without departing from the scope of the present disclosure, first information is also referred to as second information, and similarly the second information is also referred to as the first information. Depending on the context, for example, the term "if' used herein may be explained as "when" or "while", or "in response to ..., it is determined that".

The terms "module," "sub-module," "circuit," "sub-circuit," "circuitry," "sub-circuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

A unit or module may be implemented purely by software, purely by hardware, or by a combination of hardware and software. In a pure software implementation, for example, the unit or module may include functionally related code blocks or software components, that are directly or indirectly linked together, so as to perform a particular function.

Active noise reduction earphones usually provide a user interface or a physical control switch or the like to switch between the two modes, the noise reduction mode and the transparent transmission mode, requiring the user to manually operate the mode switch. If the user's hand is occupied, the operation cannot be performed, and the user experience is not good.

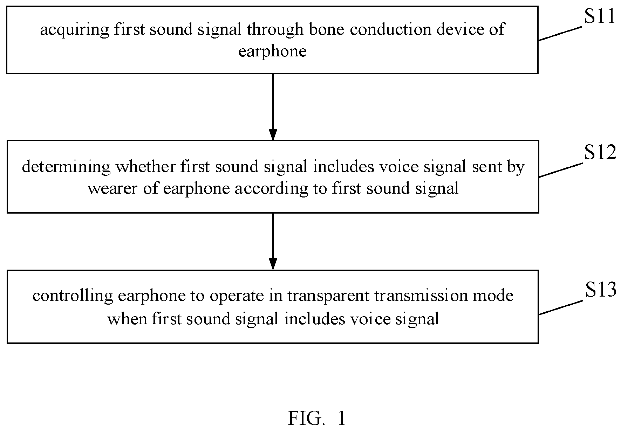

FIG. 1 is a flowchart of an earphone controlling method illustrated according to an embodiment of the present disclosure. As shown in FIG. 1, the earphone controlling method includes the following steps:
S 11, acquiring a first sound signal through a bone conduction element of an earphone;
S 12, determining whether the first sound signal includes a voice signal sent by a wearer of the earphone according to the first sound signal; and
S13, controlling the earphone to operate in a transparent transmission mode when the first sound signal includes the voice signal.

In the embodiment of the present disclosure, the earphone controlling method can be applied to an earphone, and can also be applied to a terminal device which is in communication connection with an earphone, such as a smart phone, a pair of smart glasses, a tablet computer or a personal computer, etc., the embodiments of the present disclosure make no limitation thereto.

When the earphone controlling method in the embodiments of the present disclosure is applied to an earphone, the earphone can include a processor, the above steps S 11 to S 13 are executed through the processor, and the processor can include, but is not limited to, a Central Processing Unit (CPU), a Microcontroller Unit (MCU), etc. When the earphone controlling method in the embodiments of the present disclosure is applied to a terminal device connected with the earphone, the earphone can include a communication module, the communication module is for example a Wi-Fi communication module or a Bluetooth communication module, and the terminal device connected with the earphone can acquire the first sound signal through the communication module of the earphone and execute step S12. In step S13, the controlling the earphone to operate in the transparent transmission mode when it is determined that the first sound signal includes the voice signal, by the terminal device connected with the earphone, can be that the terminal device connected with the earphone sends an instruction to operate in the transparent transmission mode to the earphone, and the earphone operates in the transparent transmission mode after receiving the instruction. The embodiments of the present disclosure are exemplified by applying the earphone controlling method to an electronic device, which includes an earphone, or a terminal device connected with the earphone.

As mentioned above, the earphone can operate in the active noise reduction mode and the transparent transmission mode. When the earphone is in the active noise reduction mode, the earphone generates reverse sound waves equal to the external noises through the noise reduction module to neutralize the noises, thereby achieving the effect of noise reduction. In the noise reduction mode, the voice conversation with the wearer of the earphone will also be eliminated at the same time, which makes it difficult for the wearer of the earphone to hear the other people's voice clearly when talking to others. Especially, when the earphone is the passive noise reduction earphone worn by wrapping the ear, it is difficult to hear the other people's voice clearly if the active noise reduction mode is enabled. When the earphone is in the transparent transmission mode, the active noise reduction function is disabled, and the external sound signal acquired by the earphone is transmitted to the earphone for playing, such that the user can talk with others while wearing the earphone. In the embodiments of the present disclosure, the earphone is controlled to operate in the transparent transmission mode when it is determined through the first sound signal acquired by the bone conduction element that the wearer of the earphone has a voice activity.

In step S11, the electronic device acquires the first sound signal through the bone conduction element built into the earphone, the bone conduction element can be an acceleration sensor, can also be a simulated bone conduction element including a magnet, a coil and a vibrating piece. Herein, the acceleration sensor converts the acquired vibration on the face or vocal cords into the sound signal; the simulated bone conduction element senses the sound signal through the coil, there will be an induced current on the coil when there is a sound signal, and thereafter the vibrating piece can be driven to vibrate based on the electromagnetic induction phenomenon between the coil and the magnet, thereby realizing the generation and transmission of sound.

The bone conduction element can directly transmit the vibration of vocal cords to the auditory nerve from the inside through the skull. Usually, the bone conduction signal has an obvious voice signal only when the wearer of the earphone speaks. However, since the first sound signal acquired by the bone conduction element will also be affected by the wearer's own movement or environment, for example, because the wearer of the earphone is running and jumping in a large amplitude, or the wearer of the earphone is on the subway, the first sound signal acquired by the bone conduction element will include some noises due to the vibration caused by the wearer's own movement or the vibration of the environment.

In this regard, the electronic device determines whether the first sound signal includes a voice signal sent by the wearer of the earphone in step S12, and controls the earphone to operate in a transparent transmission mode when it is determined that the first sound signal includes the voice signal in step S13.

It can be understood that the embodiments of the present disclosure can acquire the first sound signal according to the bone conduction element of the earphone, and control the earphone to automatically switch to the transparent transmission mode when it is determined that the first sound signal includes the voice signal sent by the wearer of the earphone, without switching the mode manually by the user, which is intelligent. Furthermore, because the bone conduction element is mainly used to transmit the voice emitted by the wearer of the earphone, but it will also be interfered by some noises, the controlling to operate in the transparent transmission mode after the wearer of the earphone is determined to have a speaking behavior makes the mode control more accurate.

It should be noted that in the embodiments of the present disclosure, the earphone can be controlled to operate in the noise reduction mode if the first sound signal does not include a voice signal.

Optionally, the determining whether the first sound signal includes a voice signal sent by a wearer of the earphone according to the first sound signal includes:
determining that the first sound signal includes the voice signal sent by the wearer of the earphone when an energy of the first sound signal is greater than a predetermined energy threshold;
   and/or,
determining that the first sound signal includes the voice signal sent by the wearer of the earphone when a frequency of the first sound signal satisfies a predetermined frequency condition.

As mentioned above, the bone conduction element has an obvious voice signal merely when the wearer of the earphone speaks. Correspondingly, the energy of the signal will be larger if there is a voice signal. Thus, the embodiments of the present disclosure can determine that the first sound signal includes the voice signal sent by the wearer of the earphone when the energy of the first sound signal is greater than the predetermined energy threshold. Herein, the predetermined energy threshold can be determined by acquiring voice signals of a large number of users through the bone conduction element.

Furthermore, as mentioned above, the movement of the wearer of the earphone or the environment in which the wearer lives will also affect the first sound signal acquired through the bone conduction element, such that some noises will be included in the first sound signal acquired through the bone conduction element. However, the frequency of the noise signal is usually different from that of the voice signal of human being. Illustratively, the frequency of the voice signal usually lies in the range of 300 HZ to 3.4 KHZ in the middle and high frequency band, while the frequency of the noise can be around 100HZ. Thus, the embodiments of the present disclosure can also determine that the first voice signal includes the voice signal sent by the wearer of the earphone when the frequency of the first voice signal satisfies the voice frequency range (i.e., the predetermined frequency condition).

Of course, the embodiments of the present disclosure can also determine that the first sound signal includes the voice signal sent by the wearer of the earphone when both the energy and frequency of the first sound signal satisfy the conditions. It can be understood that the way of determining whether the first sound signal includes the voice signal sent by the wearer of the earphone based on the energy and/or frequency of the first sound signal, in the embodiments of the present disclosure, is simple and effective.

Optionally, the method further includes:
acquiring a second sound signal through an air conduction microphone of the earphone;
determining whether the first sound signal includes a voice signal sent by a wearer of the earphone according to the first sound signal includes:
performing a correlation analysis on the first sound signal and the second sound signal to determine a correlation degree of the first sound signal and the second sound signal; and
determining that the first sound signal includes the voice signal sent by the wearer of the earphone when the correlation degree satisfies a predetermined correlation condition.

In examples of the present disclosure, an air conduction microphone is also disposed in the earphone, and the air conduction microphone transmits the vibration (sound wave) of the outside air to the auditory nerve through the eardrum. The second sound signal acquired by the electronic device through the air conduction microphone may include the sound sent by the wearer of the earphone and can also include the sound sent by other people, animals or vehicles in the external environment.

As mentioned above, the first sound signal acquired by the electronic device through the bone conduction element is usually the voice signal of the wearer himself/herself, and there can be some noise signals such as vibration caused by the wearer's own movement or the vibration of the environment. Because the bone conduction element and the air conduction microphone have different ways of acquiring sound signals, the components of sound sources in the acquired sound signals will be different correspondingly.

Exemplarily, if the wearer of the earphone sends a voice signal, both the first voice signal and the second voice signal will include the voice signal of the wearer of the earphone, the degree of correlation between the first voice signal and the second voice signal will be large correspondingly. However, if the wearer of the earphone does not send a voice signal, the first sound signal may include noise signals caused by other vibration sources (e.g., the vibration due to the movement of the wearer or the vibration of the environment where the wearer resides as mentioned above), whereas the vibration of other vibration sources cannot be acquired by the air conduction microphone, that is, the second sound signal does not include the above noise signals, and the degree of correlation between the first sound signal and the second sound signal will be small correspondingly.

Based on this, the embodiments of the present disclosure can perform the correlation analysis on the first sound signal and the second sound signal, and determine that the first sound signal includes the voice signal sent by the wearer of the earphone when the degree of correlation satisfies a predetermined correlation condition.

In the embodiments of the present disclosure, when the correlation analysis is performed, manners such as calculating the covariance or the correlation coefficient can be adopted. Herein, if the correlation degree is determined based on the manner of calculating the covariance, it can be determined that the first sound signal includes the voice signal sent by the wearer of the earphone when the value of the covariance is not zero; if the correlation degree is determined based on the manner of calculating the correlation coefficient, the larger the correlation coefficient is, the greater the correlation degree between the first sound signal and the second sound signal is. The embodiments of the present disclosure can also determine that the first sound signal includes the voice signal sent by the wearer of earphones when the correlation coefficient is greater than a predetermined correlation coefficient threshold. It should be noted that the present disclosure makes no specific limitation to the manner of correlation analysis.

It can be understood that, in the embodiments of the present disclosure, the first sound signal and the second sound signal acquired by the air conduction microphone are combined to determine whether the first sound signal includes the voice signal sent by the wearer of the earphone, which can reduce the error caused by judging only depending on the signal acquired in a single way, to be able to improve the accuracy of detecting whether the wearer of the earphone sends a voice signal.

Optionally, the controlling the earphone to operate in a transparent transmission mode when the first sound signal includes the voice signal includes:
determining whether the first sound signal includes a voice conversation content when the first sound signal includes the voice signal; and
controlling the earphone to operate in the transparent transmission mode when the first sound signal includes the voice conversation content.

In examples of the present disclosure, the electronic device further determines whether a conversation activity occurs when it is determined that the first sound signal includes a voice signal, and controls the earphone to automatically switch to the transparent transmission mode when the wearer of the earphone has the conversation activity.

Optionally, when it is determined that the first sound signal includes a voice signal, the complete first sound signal can be detected to determine whether the first sound signal includes the voice conversation content; and in some other embodiments, it is also possible that the voice signal part in the first sound signal can be detected to determine whether the first sound signal includes the voice conversation content, in this way, the accuracy of detecting the voice conversation content in the first sound signal can be improved.

It should be noted that, in the embodiments of the present disclosure, it is further determined whether the voice conversation content is included when it is determined that the first sound signal includes the voice signal sent by the wearer of the earphone, as such, the detection of the meaningless voice conversation content can be reduced when the first sound signal does not include the voice signal sent by the wearer of the earphone.

It can be understood that, in the embodiments of the present disclosure, since the wearer of the earphone usually needs to hear the other party's voice clearly merely when a conversation occurs, the earphone is controlled, according to the present disclosure, to operate in the transparent transmission mode when the first sound signal includes the voice conversation content, which enables the mode control to be more precise.

Optionally, the determining whether the first sound signal includes a voice conversation content includes:
performing a voice recognition on the first sound signal to determine a voice content included in the first sound signal; and
determining that the first sound signal includes the voice conversation content when the voice content satisfies a predetermined voice conversation content.

In the embodiments of the present disclosure, the electronic device can perform the voice recognition on the first sound signal to determine the voice content included in the first sound signal based on a voice recognition model. Exemplarily, the voice recognition model can be formed based on a deep learning network training. For example, based on the training sample data and label values, the voice recognition model is obtained after training and adjusting the parameters of networks such as Convolutional Neural Networks (CNN) and Deep Neural Networks (DNN), wherein the label value is the voice content.

After determining the voice content, the electronic device compares the voice content with the predetermined voice conversation content. For example, the predetermined voice conversation content can include greetings, blessings, or some words expressing doubts, and it can be determined that the first sound signal includes the voice conversation content when the voice content includes part or all of the words in the predetermined voice conversation content.

Optionally, the method further includes:
detecting the consistency of an audio content currently played by the earphone and a voice content included in the first sound signal when the first sound signal does not include the voice conversation content; and
controlling the earphone to operate in a noise reduction mode when the consistency of the audio content played by the earphone and the voice content included in the first sound signal are consistent is greater than or equal to a predetermined threshold.

It should be noted that, in the embodiments of the present disclosure, the fact that the audio content currently played is consistent with the voice content included in the first sound signal can mean that the voice content and the audio content are completely corresponding and synchronized in time sequence; and it can also mean that the audio content and the voice content belong to content in the same audio file, but they are not synchronized in time sequence. Usually, the reason that the audio content currently played is consistent with the voice content included in the first sound signal may be that the wearer of the earphone is singing or learning English by reading, etc. along with the audio played by the earphone.

Optionally, since the electronic device knows the audio content currently played, the electronic device can determine the voice content included in the first sound signal by means of the aforementioned voice recognition, such that the electronic device can compare the audio content currently played with the voice content included in the sound signal for the consistency, and control the earphone to operate in a noise reduction mode when the consistency is greater than or equal to the predetermined threshold. It should be noted that a method similar to the correlation analysis between the first sound signal and the second sound signal can be used to determine the consistency of the audio content and the voice content. If the degree of correlation between the audio content and the voice content is high, it means the consistency is good, and the corresponding predetermined threshold can be a threshold used to characterize the degree of correlation.

In some other embodiments, the electronic device can perform semantic recognition on the first sound signal, and determine a content identifier corresponding to the voice content. Furthermore, the electronic device can further determine a file identity corresponding to the audio content currently played, and determine the consistency according to the content identity and the file identity. In the embodiments of the present disclosure, for example, the earphone is controlled to operate in a noise reduction mode when the content identity and the file identity are consistent. Herein, the content identity and the file identity can be song titles, English article titles, etc., and the embodiments of the present disclosure makes no limitation thereto.

It can be understood that, in the embodiments of the present disclosure, if the consistency between the audio content played by the earphone and the voice content included in the first sound signal is greater than or equal to the predetermined threshold, it means that the wearer of the earphone has no intention to communicate with the outside world, such that controlling the earphone to operate in the noise reduction mode can reduce the interference of external sounds, thereby improving the user experience.

Optionally, the method further includes:
determining whether a third sound signal acquired through the bone conduction element in a predetermined time period includes a voice signal after operating in the transparent transmission mode; and
controlling the earphone to switch to a noise reduction mode when the third sound signal does not include a voice signal.

In the embodiments of the present disclosure, after the electronic device controls the earphone to operate in the transparent transmission mode, it will continue to monitor whether the acquired third sound signal includes a voice signal to determine whether the wearer of the earphone is speaking. The earphone is controlled to switch to the noise reduction mode when it is determined that there is no speaking behavior, such that the earphone can adjust the operating mode adaptively according to the behavior of the wearer of the earphone, thereby improving the user experience.

It should be noted that the method for determining whether the third sound signal includes a voice signal is the same as the method for determining whether the first sound signal includes a voice signal, and no details are repeated herein.

Optionally, the earphone is provided with an air vent valve, and the method further includes:
controlling the air vent valve of the earphone to open when it is determined that the first sound signal includes the voice signal sent by the wearer of the earphone.

In the embodiments of the present disclosure, since the earphone, especially the in-ear earphone, shields or blocks the wearer's ear canal to a certain extent, this will cause the generation of the occlusion effect, and will reduce the user's hearing threshold, such that the wearer hears his own voice muffled. The main reason for generation of the occlusion effect is that after the user wears the earphone, the way for the sound to diffuse outward is blocked, and the sound from bone conduction cannot be diffused out.

In this regard, in the examples of the present disclosure, an air vent valve is provided on the earphone, and the air vent valve of the earphone is controlled to open when the electronic device determines that the first sound signal includes a voice signal sent by the wearer of the earphone, such that sound transmitted by the bone conduction element can be diffused through the air vent valve, thereby reducing the wearer's sense of occlusion and improving the user experience.

Optionally, the acquiring a first sound signal through a bone conduction element of the earphone includes:
acquiring the first sound signal through the bone conduction element of the earphone when an operating mode control function of the earphone is enabled.

In the embodiments of the present disclosure, the operating mode control function of the earphone is the function of automatically controlling the earphone to operate in the transparent transmission mode or the noise reduction mode based on the aforementioned method. The enabling of this function of the earphone can be controlled by a switch, and the switch can be a physical switch or a virtual switch on the earphone, and can also be a virtual switch on a terminal device connected with the earphone.

Exemplarily, if the switch is a physical switch on the earphone, after the user enables the operating mode control function of the earphone through the physical switch, the electronic device can acquire the first sound signal through the bone conduction element of the earphone to control the operating mode of the earphone; and if the switch is a virtual switch on the earphone, for example, the earphone can enable the operating mode control function of the earphone based on the user's voice instruction received. If the switch is a virtual switch on the terminal device connected with the earphone, for example, the terminal device can receive the user's click operation or voice instruction based on the displayed interface to obtain an instruction to enable the operating mode control function of the earphone, and send the instruction to the earphone to enable the operating mode control function of the earphone. The embodiments of the present disclosure makes no limitation to the manner of enabling the operating mode control function of the earphone.

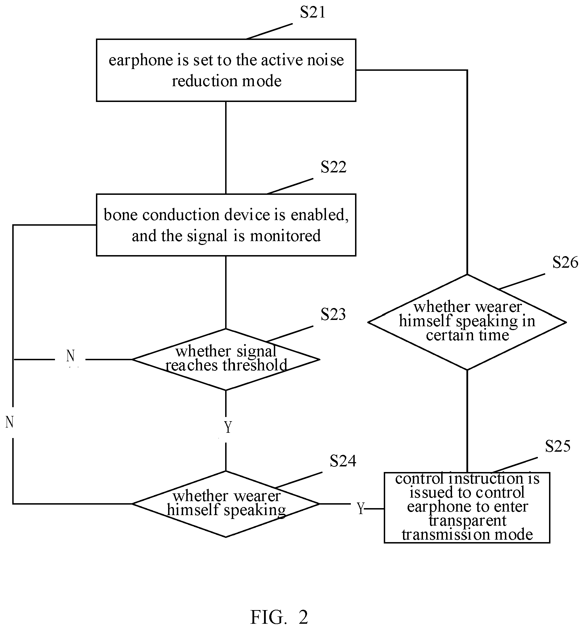

FIG. 2 is an exemplary flowchart of an earphone controlling method in an embodiments of the present disclosure. As shown in FIG. 2, the earphone controlling method includes the following steps.

S21, the earphone is set to the active noise reduction mode.

In the embodiments of the present disclosure, the earphone itself or the terminal device connected with the earphone can control the earphone to operate in the active noise reduction mode.

S22, the bone conduction element is enabled, and the signal is monitored.

In the embodiments of the present disclosure, when the earphone is set to the active noise reduction mode, the bone conduction element is enabled to monitor the signal, and the monitored signal is the first sound signal of the present disclosure.

S23, it is determined whether the signal reaches the threshold; if yes, execute step S24; if not, go back to execute step S22.

In the embodiments of the present disclosure, it is determined whether the signal reaches the threshold, that is, whether the energy and/or frequency of the first sound signal satisfies the corresponding threshold, if yes, continue to perform subsequent steps, if not, return to step S22.

S24, it is detected whether the wearer himself/herself is speaking; if yes, execute step S25; if not, go back to execute step S22.

In the embodiments of the present disclosure, it is detected whether the wearer himself/herself is speaking, that is, the electronic device determines whether the first sound signal includes the voice signal sent by the wearer of the earphone. If it is detected that the wearer is speaking, continue to the subsequent steps.

S25, a control instruction is issued to control the earphone to enter the transparent transmission mode.

In the embodiments of the present disclosure, the earphone itself or the terminal device connected with the earphone can issue a control instruction to make the earphone enter the transparent transmission mode.

S26, it is detected whether the wearer himself/herself is speaking within a certain time period; if not, return to execute step S21.

In the embodiments of the present disclosure, it is determined whether the wearer himself/herself is speaking within a certain time period, that is, it is determined whether the third sound signal acquired through the bone conduction element within the predetermined time period includes the voice signal, if not, the earphone is controlled to switch to the noise reduction mode to operate.

It can be understood that the embodiments of the present disclosure can determine whether the wearer of the earphone sends a voice according to the signal monitored by the bone conduction element of the earphone, and control the earphone to automatically switch to the transparent transmission mode when the wearer of the earphone sends a voice, and control the earphone to automatically switch to the noise reduction mode when the wearer of the earphone sends no voice, without manually switching the mode by the user, which is intelligent.

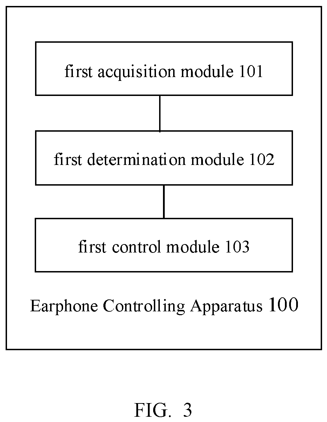

FIG. 3 is a diagram of an earphone controlling apparatus illustrated according to an exemplary embodiment. Referring to FIG. 3, the earphone control apparatus 100 includes:
a first acquisition module 101 configured to acquire a first sound signal through a bone conduction element of an earphone;
a first determination module 102 configured to determine whether the first sound signal includes a voice signal sent by a wearer of the earphone according to the first sound signal;
a first control module 103 configured to control the earphone to operate in a transparent transmission mode when the first sound signal includes the voice signal.

Optionally, the first determination module 102 is configured to determine that the first sound signal includes the voice signal sent by the wearer of the earphone when an energy of the first sound signal is greater than a predetermined energy threshold; and/or, to determine that the first sound signal includes the voice signal sent by the wearer of the earphone when a frequency of the first sound signal satisfies s predetermined frequency condition.

Optionally, the apparatus further includes:
a second acquisition module configured to acquire a second sound signal through an air conduction microphone of the earphone;
the first determination module 102 is configured to perform the correlation analysis on the first sound signal and the second sound signal to determine a correlation degree of the first sound signal and the second sound signal; and to determine that the first sound signal includes the voice signal sent by the wearer of the earphone when the correlation degree satisfies a predetermined correlation condition.

Optionally, the first control module 103 is configured to determine whether the first sound signal includes a voice conversation content when the first sound signal includes the voice signal; and to control the earphone to operate in the transparent transmission mode when the first sound signal includes the voice conversation content.

Optionally, the first control module 103 is configured to perform the voice recognition on the first sound signal to determine the voice content included in the first sound signal; and to determine that the first sound signal includes the voice conversation content when the voice content satisfies the predetermined voice conversation content.

Optionally, the apparatus further includes:
a detection module configured to detect the consistency between an audio content currently played by the earphone and a voice content included in the first sound signal when the first sound signal does not include the voice conversation content; and
a second control module further configured to control the earphone to operate in a noise reduction mode when the consistency between the audio content played by the earphone and the voice content included in the first sound signal is greater than or equal to a predetermined threshold.

Optionally, the apparatus further includes:
a third determination module configured to determine whether a third sound signal acquired through the bone conduction element in a predetermined time period includes a voice signal after operating in the transparent transmission mode; and
a fourth control module configured to control the earphone to switch to a noise reduction mode when the third sound signal does not include a voice signal.

Optionally, the earphone is provided with an air vent valve, and the apparatus further includes:
a fifth control module configured to control the air vent valve of the earphone to open when it is determined that the first sound signal includes the voice signal sent by the wearer of the earphone.

Optionally, the first acquisition module 101 is configured to acquire the first sound signal through the bone conduction element of the earphone when an operating mode control function of the earphone is enabled.

With respect to the apparatus in the above embodiments, the specific manners for performing operations for individual modules therein have been described in detail in the embodiments regarding the methods, which will not be elaborated herein.

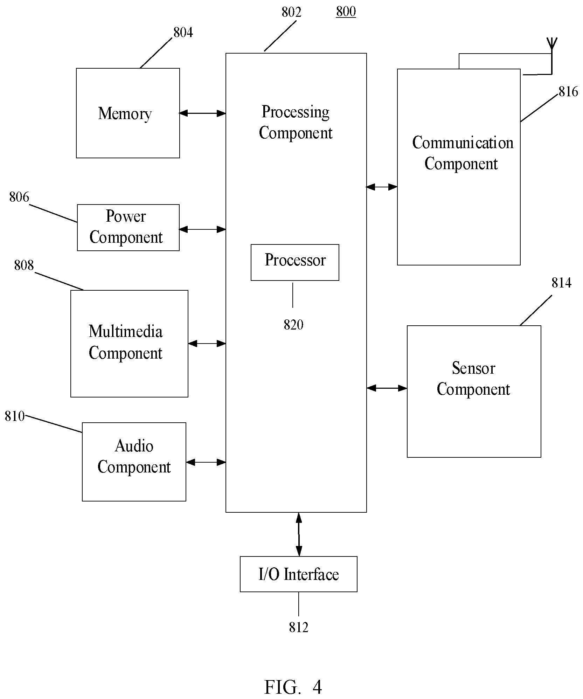

FIG. 4 is a block diagram of an electronic device illustrated according to an exemplary embodiment. For example, the device 800 can be a mobile phone, a mobile computer, or the like.

Referring to FIG. 4, the device 800 can include one or more of the following components: a processing component 802, a memory 804, a power supply component 806, a multimedia component 808, an audio component 810, an input/output (I/O) interface 812, a sensor component 814, and communication component 816.

The processing component 802 typically controls overall operations of the device 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules which facilitate the interaction between the processing component 802 and other components. For instance, the processing component 802 can include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 can include a power management system, one or more power sources, and any other components associated with the generation, management, and distribution of power in the device 800.

The multimedia component 808 includes a screen providing an output interface between the device 800 and the user. Optionally, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. Optionally, the multimedia component 808 includes a front camera and/or a rear camera. The front camera and the rear camera can receive an external multimedia datum while the device 800 is in an operation mode, such as a photographing mode or a video mode. Each of the front camera and the rear camera can be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal can be further stored in the memory 804 or transmitted via the communication component 816. Optionally, the audio component 810 further includes a speaker to output audio signals.

The I/O interface 812 provides an interface between the processing component 802 and peripheral interface modules, such as a keyboard, a click wheel, buttons, and the like. The buttons can include, but are not limited to, a home button, a volume button, a starting button, and a locking button.

The sensor component 814 includes one or more sensors to provide status assessments of various aspects of the device 800. For instance, the sensor component 814 can detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 can include a proximity sensor configured to detect the presence of nearby objects without any physical contact. The sensor component 814 can also include a light sensor, such as a CMOS or CCD image sensor, for use in imaging applications. Optionally, the sensor component 814 can also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as Wi-Fi, 2G, 3G, 4G/LTE, 5G/NR or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 800 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium can be a ROM, a RAM, a CD-ROM, a magnetic tape, a floppy disc, an optical data storage device, and the like.

There is provided a non-transitory computer-readable storage medium, wherein an electronic device is enabled to execute the method for controlling an earphone when instructions in the storage medium are executed by a processor in the electronic device. The method comprises:
acquiring a first sound signal through a bone conduction element of the earphone;
determining whether the first sound signal includes a voice signal sent by a wearer of the earphone according to the first sound signal; and
controlling the earphone to operate in a transparent transmission mode when the first sound signal includes the voice signal.

The technical solutions provided by the embodiments of the present disclosure can include the following advantages:
the electronic device acquires the first sound signal according to the bone conduction element of the earphone, and controls the earphone to automatically switch to the transparent transmission mode when it is determined that the first sound signal includes the voice signal sent by the wearer of the earphone, without manually switching the mode by the user, which is intelligent; and Furthermore, since the bone conduction element is mainly used to conduct the voice of the wearer of the earphone, and also interfered by some noises, controlling to operate in the transparent transmission mode after it is determined that the wearer of the earphone has the speaking activity makes the mode control more accurate.

Some other embodiments of the present disclosure can be available to those skilled in the art upon consideration of the specification and practice of the various embodiments disclosed herein. The present disclosure is intended to cover any variations, uses, or adaptations of the present disclosure following general principles of the present disclosure and include the common general knowledge or conventional technical means in the art without departing from the present disclosure. The specification and examples can be shown as illustrative only, and the true scope and spirit of the disclosure are indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. An earphone controlling method, comprising:
acquiring (S11) a first sound signal through a bone conduction element of an earphone;
determining (S12) whether the first sound signal comprises a voice signal sent by a wearer of the earphone according to the first sound signal; and
controlling (S13) the earphone to operate in a transparent transmission mode when the first sound signal comprises the voice signal.

2. The method according to claim 1, wherein determining (S12) whether the first sound signal comprises the voice signal sent by the wearer of the earphone according to the first sound signal comprises at least one of:
determining that the first sound signal comprises the voice signal sent by the wearer of the earphone when an energy of the first sound signal is greater than a predetermined energy threshold; and
determining that the first sound signal comprises the voice signal sent by the wearer of the earphone when a frequency of the first sound signal satisfies a predetermined frequency condition.

3. The method according to claim 1 or 2, wherein the method further comprises:
acquiring a second sound signal through an air conduction microphone of the earphone; and
wherein determining whether the first sound signal comprises the voice signal sent by the wearer of the earphone according to the first sound signal comprises:
performing a correlation analysis on the first sound signal and the second sound signal to determine a correlation degree of the first sound signal and the second sound signal; and
determining that the first sound signal includes the voice signal sent by the wearer of the earphone when the correlation degree satisfies a predetermined correlation condition.

4. The method according to any of claims 1 to 3, wherein controlling (S13) the earphone to operate in a transparent transmission mode when the first sound signal includes the voice signal comprises:
determining that the first sound signal comprises a voice conversation content when the first sound signal includes the voice signal; and
controlling the earphone to operate in the transparent transmission mode when the first sound signal comprises the voice conversation.

5. The method according to claim 4, wherein determining whether the first sound signal comprises the voice conversation content comprises:
performing voice recognition on the first sound signal to determine a voice content included in the first sound signal; and
determining that the first sound signal comprises the voice conversation content when the voice content satisfies a preset voice conversation content.

6. The method according to any of claims 1 to 5, wherein the method further comprises:
detecting a consistency between an audio content currently played by the earphone and a voice content included in the first sound signal when the first sound signal does not include the voice conversation content; and
controlling the earphone to operate in a noise reduction mode when the consistency between the audio content played by the earphone and the voice content included in the first sound signal is greater than or equal to a predetermined threshold.

7. The method according to any of claims 1 to 6, wherein the method further comprises:
determining whether a third sound signal acquired through the bone conduction element in a predetermined time period includes a voice signal after operating in the transparent transmission mode; and
controlling the earphone to switch to a noise reduction mode when the third sound signal does not include a voice signal.

8. The method according to any of claims 1-7, wherein the earphone is provided with an air vent valve, and the method further comprises:
controlling the air vent valve of the earphone to open when the first sound signal comprises the voice signal sent by the wearer of the earphone.

9. The method according to any of claims 1 to 8, wherein acquiring a first sound signal through a bone conduction element of the earphone comprises:
acquiring the first sound signal through the bone conduction element of the earphone when an operating mode control function of the earphone is enabled.

10. An earphone controlling apparatus (800), comprising:
a processor (820);
a memory (804) for storing processor-executable instructions;
**characterized in that** the processor is configured to:
acquire a first sound signal through a bone conduction element of the earphone;
determine whether the first sound signal includes a voice signal sent by a wearer of the earphone according to the first sound signal;
control the earphone to operate in a transparent mode in the case the first sound signal includes the voice signal.

11. The apparatus according to claim 10, wherein the processor (820) is further configured to:
determine that the first sound signal comprises the voice signal sent by the wearer of the earphone when an energy of the first sound signal is greater than a predetermined energy threshold; and/or, determine that the first sound signal includes the voice signal sent by the wearer of the earphone when a frequency of the first sound signal satisfies a predetermined frequency condition.

12. The apparatus according to claim 10 or 11, wherein the processor (820) is further configured to:
acquire a second sound signal through an air conduction microphone of the earphone; and
perform a correlation analysis on the first sound signal and the second sound signal to determine a correlation degree of the first sound signal and the second sound signal, and determine that the first sound signal comprises the voice signal sent by the wearer of the earphone when the correlation degree satisfies a predetermined correlation condition.

13. The apparatus according to any of claims 10 to 12, wherein the processor (820) is further configured to:
determine that the first sound signal includes a voice conversation content when the first sound signal includes the voice signal, and control the earphone to operate in the transparent transmission mode when the first sound signal includes the voice conversation content, and preferably,
perform voice recognition on the first sound signal to determine a voice content included in the first sound signal, and determine that the first sound signal comprises the voice conversation content when the voice content satisfies a predetermined voice conversation content.

14. The apparatus according to any of claims 10 to 13, wherein the processor (820) is further configured to:
detect a consistency between an audio content currently played by the earphone and a voice content included in the first sound signal when the first sound signal does not include the voice conversation content; and
control the earphone to operate in a noise reduction mode when the consistency between the audio content played by the earphone and the voice content included in the first sound signal is greater than or equal to a predetermined threshold.

15. A non-transitory computer-readable storage medium having stored therein instructions that, when executed by a processor of an electronic device, causes the electronic device to perform the method according to any of claims 1 to 9.
